# DEMANDE DE BREVET EUROPEEN

(11) **EP 1 681 839 A1**
(43) Date de publication de la demande: **19.07.2006**
(21) Numéro de dépôt: 06100217.6
(22) Date de dépôt: 10.01.2006
(51) Int. Cl.: H04M 1/2745, H04Q 7/32

(54) **Procédé de gestion de repertoires dans un terminal mobile et terminal mobile associé**

(30) Priorité: 12.01.2005 FR 0500292
(71) Demandeur: Bouygues Telecom, 92100 Boulogne Billancourt (FR)
(72) Inventeur: Nicolas, Cédric, 75016 Paris (FR); Smierzchalski Stéphane, 75014 Paris (FR)
(74) Mandataire: Callon de Lamarck, Jean-Robert

(57) **Abrégé**

L'invention concerne un procédé de gestion de répertoires dans un terminal mobile (200) contenant un premier répertoire (241) et un deuxième répertoire (221), caractérisé en ce qu'il comprend les étapes consistant à :
- détecter (61) qu'un utilisateur modifie une information contenue dans le premier répertoire (241),
- copier (66) l'information modifiée dans le deuxième répertoire (221).

L'invention concerne également un terminal mobile cellulaire, caractérisé en ce qu'il inclut des moyens de traitement programmés pour mettre en oeuvre le procédé.

## Description

L'invention concerne le domaine de la téléphonie mobile.

Elle concerne en particulier la gestion des répertoires dans un téléphone mobile.

Lorsqu'un utilisateur d'un téléphone mobile souhaite enregistrer un contact dans son téléphone mobile, il a le choix entre plusieurs répertoires. Il peut par exemple enregistrer le contact dans le répertoire de sa carte SIM (Subscriber Identity Module) ou dans le répertoire du téléphone.

Un avantage de la carte SIM est qu'elle peut être utilisée dans différents téléphones mobiles. En particulier, lorsque l'utilisateur change de téléphone mobile, il peut transférer sa carte SIM dans son nouveau téléphone mobile et ainsi conserver son répertoire de contacts.

Un inconvénient cependant de la carte de SIM est qu'elle présente une mémoire de capacité limitée et que par conséquent le répertoire qu'elle contient est limité en taille. C'est pourquoi, les cartes SIM 2G et 3G qui sont destinées à remplacer les cartes SIM actuellement utilisées sont prévues pour présenter une mémoire de capacité accrue.

Toutefois, le répertoire du téléphone est généralement plus important et présente en outre des champs plus nombreux que ceux du répertoire de la carte SIM.

On observe que les utilisateurs de téléphones mobiles ont tendance à confondre les différents répertoires. Il est par exemple difficile pour les utilisateurs de se rappeler qu'un contact particulier a été enregistré dans l'un ou l'autre des répertoires.

Souvent, lorsqu'un utilisateur change de téléphone mobile, il s'aperçoit qu'il a perdu certains contacts qui étaient enregistrés dans le répertoire de son ancien téléphone mobile.

Un but de l'invention est de simplifier l'utilisation des répertoires pour l'utilisateur.

A cet effet, l'invention propose un procédé de gestion de répertoires dans un terminal mobile contenant un premier répertoire et un deuxième répertoire, caractérisé en ce qu'il comprend les étapes consistant à :
- détecter qu'un utilisateur modifie une information contenue dans le premier répertoire,
- copier l'information modifiée dans le deuxième répertoire.

Le procédé de l'invention permet pour l'utilisateur de modifier les données dans un seul répertoire, les modifications effectuées étant automatiquement reportées dans l'autre répertoire.

Le procédé pourra comprendre en outre l'étape selon laquelle si le deuxième répertoire est plein, afficher un message d'alerte sur un écran du terminal mobile.

Dans une mise en oeuvre du procédé, seules des informations contenues dans le premier répertoire peuvent être modifiées par l'utilisateur.

Dans une mise en oeuvre du procédé, le premier répertoire est un répertoire enregistré dans des moyens mémoire du terminal et le deuxième répertoire est un répertoire enregistré des moyens mémoire amovibles, tels qu'une carte SIM.

Le procédé pourra comprendre des étapes préalables d'initialisation consistant à :
- enregistrer dans les moyens mémoire du terminal des données identifiant des moyens mémoire amovibles associés au terminal,
- lorsqu'un utilisateur met en marche le terminal, déterminer si les moyens mémoire amovibles présents dans le terminal sont associés au terminal mobile,
- si les moyens mémoire amovibles présents dans le terminal sont associés au terminal, activer un premier mode de fonctionnement du terminal dans lequel le terminal exécute les étapes du procédé de gestion de répertoire de l'invention.

Le procédé peut comprendre en outre l'étape consistant à afficher une proposition sélectionnable par un utilisateur pour enregistrer des données identifiant les moyens mémoire amovibles présents dans le terminal en tant que moyens mémoire amovibles associés.

Le procédé peut comprendre en outre les étapes consistant à déterminer si l'un des répertoires est vide et si l'un des répertoires est vide, copier des informations de l'autre répertoire dans le répertoire vide.

Le procédé peut comprendre en outre l'étape selon laquelle, si les moyens mémoire amovibles présents dans le terminal ne sont pas associés au terminal, activer un deuxième mode de fonctionnement dans lequel un utilisateur ne peut modifier que des données contenues dans le deuxième répertoire.

Le procédé peut comprendre en outre une étape consistant à mettre à jour le premier et/ou le deuxième répertoire avant d'activer le premier mode de fonctionnement.

Dans une mise en oeuvre du procédé de l'invention, la mise à jour du premier répertoire comprend les sous-étapes consistant à :
- déterminer si le deuxième répertoire a été modifié,
- si le deuxième répertoire a été modifié, copier des modifications du deuxième répertoire dans le premier répertoire.

Le procédé peut comprendre la sous-étape consistant à déterminer pour chaque entrée du deuxième répertoire un paramètre de contrôle associé à l'entrée et comparer le paramètre de contrôle ainsi déterminé avec à un paramètre de contrôle enregistré dans des moyens mémoire du terminal pour en déduire si l'entrée a été modifiée.

Par ailleurs, l'étape de mise à jour du deuxième répertoire peut comprendre les sous-étapes consistant à :
- déterminer si le premier répertoire a été modifié,
- si le premier répertoire a été modifié, copier des modifications du premier répertoire dans le deuxième répertoire.

En particulier, le procédé peut comprendre la sous-étape consistant à déterminer pour chaque entrée du premier répertoire si il existe des modifications enregistrées dans le téléphone mobile en tant que modification en cours.

L'invention se rapporte également à un terminal mobile cellulaire, caractérisé en ce qu'il inclut des moyens de traitement programmés pour mettre en oeuvre le procédé de gestion de répertoires qui précède.

D'autres caractéristiques et avantages ressortiront encore de la description qui suit, laquelle est purement illustrative et non limitative et doit être lue en regard des figures annexées parmi lesquelles :
- la figure 1 est un organigramme représentant de manière schématique un procédé d'initialisation d'un téléphone mobile conforme à un mode de mise en oeuvre de l'invention,
- la figure 2 est un organigramme représentant de manière schématique les sous-étapes d'une étape de mise à jour des répertoires du procédé de la figure 1,
- la figure 3 est un organigramme représentant de manière schématique un procédé de gestion des répertoires d'un téléphone mobile conforme à un premier mode de fonctionnement,
- la figure 4 illustre de manière schématique un téléphone mobile apte à mettre en oeuvre le procédé des figures 1 à 4.

Dans la suite de la présente description, le terme « répertoire » désigne une liste d'entrées mémorisées dans un emplacement prévu spécifiquement par exemple dans le téléphone mobile ou dans la carte SIM.

Le terme « entrée » désigne une série de données qui sont généralement associées à une même personne ou un même contact dans le répertoire.

Chaque entrée comprend des informations classées par « champs » ou rubriques. Chaque champ correspond généralement à un attribut d'un contact. Les champs comprennent par exemple le nom, le prénom, le numéro de téléphone mobile, le numéro de téléphone fixe, le numéro de télécopie, l'adresse email, la photo de la personne, etc.

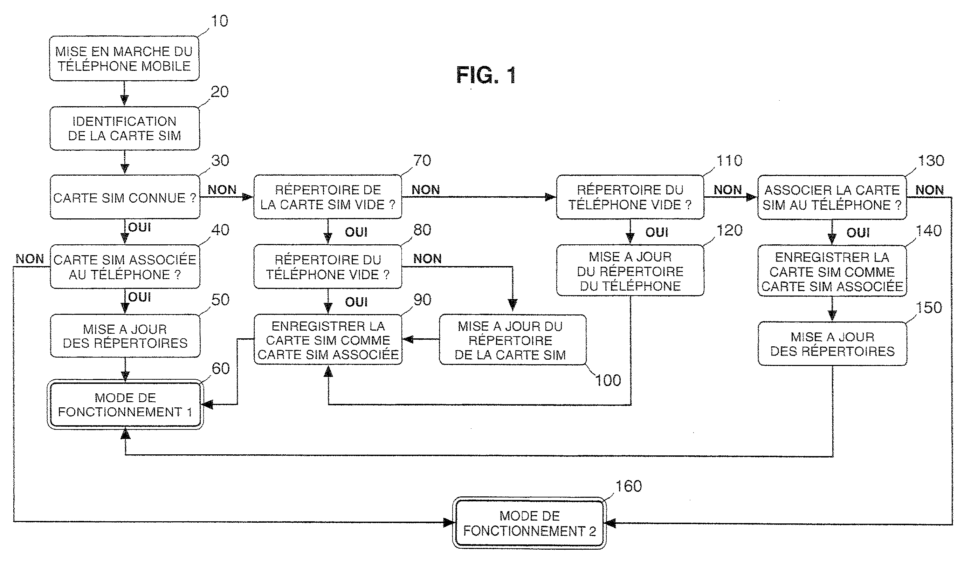

Sur la figure 1, le procédé d'initialisation du téléphone mobile est déclenché automatiquement lors de la mise en marche du téléphone mobile. Ce procédé d'initialisation conduit à la sélection d'un mode de fonctionnement du téléphone mobile (appelés « mode de fonctionnement associé » et « mode de fonctionnement dissocié »).

Il existe ainsi deux modes de fonctionnement du téléphone mobile qui correspondent à deux configurations possibles du téléphone mobile.

Selon une première configuration, le téléphone mobile contient une carte SIM associée au téléphone mobile. Dans ce cas, le téléphone mobile sélectionne le mode de fonctionnement associé dans lequel l'utilisateur a accès uniquement au répertoire du téléphone mobile. En outre, dans ce mode de fonctionnement, le répertoire de la carte SIM est mis à jour automatiquement en fonction des modifications apportées aux entrées contenues dans le répertoire du téléphone mobile. L'utilisation du téléphone mobile est donc simplifiée pour l'utilisateur pour qui seul le répertoire du téléphone mobile est visible.

Selon une deuxième configuration, le téléphone mobile contient une carte SIM qui n'est pas une carte SIM associée au téléphone mobile. C'est par exemple le cas lorsqu'un deuxième utilisateur emprunte le téléphone mobile du premier utilisateur et introduit dans le téléphone mobile sa propre carte SIM. Dans ce cas, le téléphone mobile sélectionne le mode de fonctionnement dissocié dans lequel l'utilisateur a accès uniquement au répertoire de la carte SIM et dans lequel seul le répertoire de la carte SIM peut être modifié.

Le procédé d'initialisation du téléphone mobile comprend les étapes suivantes.

Selon une première étape 10, le téléphone mobile est mis en marche par un utilisateur. La mise en marche du téléphone mobile a pour effet de déclencher un programme qui commande l'exécution automatique des étapes suivantes.

Selon une deuxième étape 20, le téléphone mobile identifie la carte SIM présente dans le téléphone mobile. A cet effet, le téléphone mobile lit le numéro de série (appelé ICCID) de la carte.

Selon une troisième étape 30, le téléphone mobile détermine si la carte SIM est une carte SIM connue.

Le téléphone mobile contient une pluralité de numéro de série de cartes SIM connues enregistrés dans une mémoire du téléphone mobile. Le téléphone mobile compare le numéro de série de la carte SIM présente dans le téléphone mobile avec chacun des numéros de séries enregistrés. Le téléphone mobile en déduit si la carte SIM est connue ou non.

Si la carte SIM est connue, le téléphone mobile exécute une quatrième étape 40 selon laquelle le téléphone mobile détermine si la carte SIM est une carte SIM associée au téléphone mobile.

Parmi les numéros enregistrés dans la mémoire du téléphone mobile, un ou plusieurs des numéros sont enregistrés en tant que numéro(s) de carte SIM associée au téléphone mobile tandis que les autres numéros sont enregistrés en tant que numéros dissociés. Le téléphone mobile contient par exemple deux numéros de carte SIM associés (SIM 1 et SIM 2) choisis par l'utilisateur.

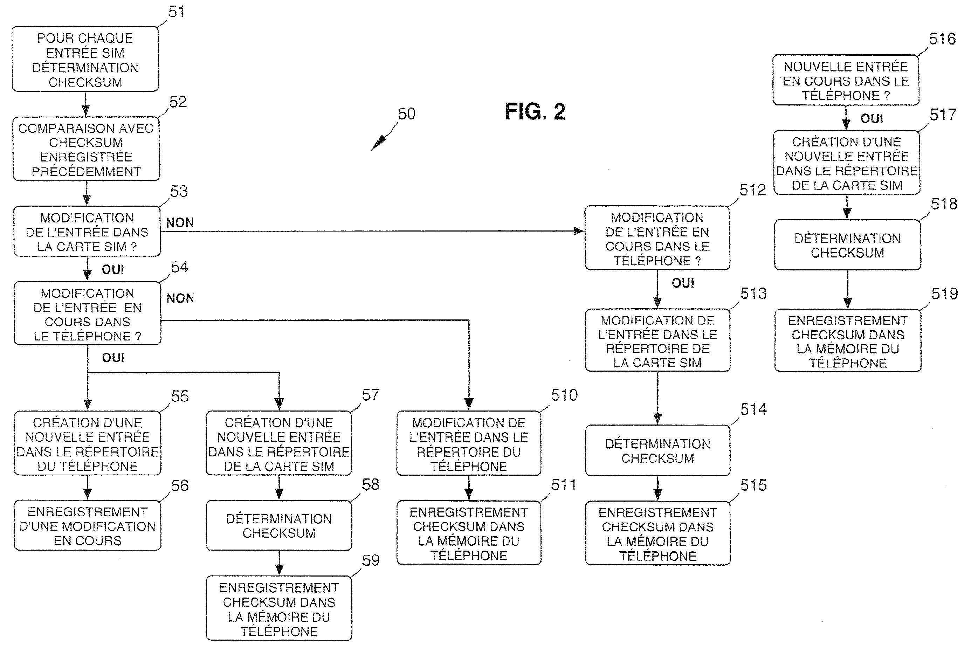

Si la carte SIM est une carte SIM associée au téléphone mobile, le téléphone mobile réalise une cinquième étape 50 de mise à jour les répertoires de la carte SIM et du téléphone mobile. Cette étape permet de synchroniser le contenu des deux répertoires pour simplifier l'utilisation de ces répertoires par l'utilisateur. La cinquième étape 50 comprend des sous-étapes qui seront décrites par la suite en relation avec la figure 2.

Selon une sixième étape 60, le téléphone mobile sélectionne un premier mode de fonctionnement (mode de fonctionnement 1) appelé « mode de fonctionnement associé » dans lequel l'utilisateur a accès uniquement au répertoire du téléphone mobile et dans lequel le répertoire de la carte SIM est mis à jour automatiquement en fonction des modifications apportées aux entrées contenues dans le répertoire du téléphone mobile.

Si, lors de la quatrième étape 40, le téléphone mobile détermine que la carte SIM n'est pas une carte SIM associée, le téléphone mobile exécute une seizième étape 160 selon laquelle le téléphone mobile sélectionne le deuxième (mode de fonctionnement 2) appelé « mode de fonctionnement dissocié ».

Si lors de la troisième étape 30, le téléphone mobile détermine que la carte SIM n'est pas connue, alors le téléphone mobile réalise une septième étape 70 selon laquelle le téléphone mobile détermine si le répertoire de la carte SIM est vide.

Si le répertoire de la carte SIM est vide, cela signifie que l'utilisateur a introduit une carte SIM vierge dans le téléphone mobile. Dans ce cas, le téléphone mobile réalise une huitième étape 80 selon laquelle le téléphone mobile détermine si le répertoire du téléphone mobile est vide.

Si le répertoire du téléphone mobile est vide, alors le téléphone mobile réalise une neuvième étape 90 selon laquelle il enregistre le numéro de la carte SIM comme numéro de carte SIM associée.

Puis, le téléphone mobile réalise la sixième étape 60 selon laquelle le téléphone mobile sélectionne le premier mode de fonctionnement (mode de fonctionnement « associé »).

Si au cours de la huitième étape 80, le téléphone mobile détermine que le répertoire du téléphone mobile contient des entrées, alors, le téléphone mobile réalise une dixième étape 100 selon laquelle le téléphone mobile met à jour le répertoire de la carte SIM. A cet effet, le téléphone mobile copie les entrées contenues dans le répertoire du téléphone mobile dans le répertoire de la carte SIM.

Si le répertoire de la carte SIM contient moins de champs que le répertoire du téléphone mobile, le téléphone mobile ne copie que les champs identiques.

Puis, le téléphone mobile exécute la neuvième étape 90 selon laquelle il enregistre le numéro de la carte SIM comme numéro de carte SIM associée.

On remarquera que la neuvième étape 90 ne sera exécutée que si le nombre de cartes SIM associées au téléphone mobil est inférieur à un nombre admissible prédéterminé. De manière optionnelle, le téléphone mobile peut effacer dans la mémoire du téléphone mobile un numéro de carte SIM associé et le remplacer par le numéro de la carte SIM présente dans le téléphone.

Ensuite, le téléphone mobile exécute la sixième étape 60 selon laquelle le téléphone mobile sélectionne le premier mode de fonctionnement (mode de fonctionnement 1) appelé « mode de fonctionnement associé ».

Si, lors de la septième étape 70, le téléphone mobile détermine que le répertoire de la carte SIM contient des entrées, alors le téléphone mobile exécute une onzième étape 110 selon laquelle le téléphone mobile détermine si le répertoire du téléphone mobile est vide.

Si le répertoire du téléphone mobile est vide, alors le téléphone mobile exécute une douzième étape 120 selon laquelle le téléphone mobile met à jour le répertoire du téléphone mobile. A cet effet, le téléphone mobile copie le contenu du répertoire de la carte SIM dans le répertoire du téléphone mobile.

Puis, le téléphone mobile exécute la neuvième étape 90 selon laquelle il enregistre le numéro de la carte SIM comme numéro de carte SIM associée.

Ensuite, le téléphone mobile exécute la sixième étape 60 selon laquelle le téléphone mobile sélectionne le premier mode de fonctionnement (mode de fonctionnement 1) appelé « mode de fonctionnement associé ».

Si, lors de la onzième étape 110, le téléphone mobile détermine que le répertoire du téléphone mobile contient des entrées, alors le téléphone mobile exécute la treizième étape 130 selon laquelle le téléphone mobile affiche sur un écran du téléphone mobile un message proposant à l'utilisateur d'associer la carte SIM au téléphone mobile. Le téléphone mobile affiche un message du type « Souhaitez-vous associer la carte SIM au téléphone ? » ainsi que deux propositions de réponse « OUI » ou « NON ».

Si l'utilisateur souhaite associer la carte SIM au téléphone mobile, il commande le téléphone mobile pour sélectionner la réponse « OUI ». Dans ce cas, le téléphone mobile exécute une quatorzième étape 140 identique à la neuvième étape 90. Selon cette quatorzième étape 140, le téléphone mobile enregistre le numéro de la carte SIM comme numéro de carte SIM associée

Puis le téléphone exécute une quinzième étape 150 similaire à la cinquième étape 50. La quinzième étape 150 est une étape de mise à jour les répertoires de la carte SIM et du téléphone mobile. Cette étape permet de synchroniser le contenu des deux répertoires pour simplifier l'utilisation de ces répertoires par l'utilisateur.

Ensuite, le téléphone mobile exécute la sixième étape 60 selon laquelle le téléphone mobile sélectionne le premier mode de fonctionnement (mode de fonctionnement 1) appelé « mode de fonctionnement associé ».

Si lors de la treizième étape 130, l'utilisateur ne souhaite pas associer la carte SIM au téléphone mobile, il commande le téléphone mobile pour sélectionner la réponse « NON ». Dans ce cas, le téléphone mobile exécute la seizième étape 160 selon laquelle le téléphone mobile sélectionne le deuxième mode de fonctionnement.

Le procédé qui vient d'être décrit permet d'associer automatiquement une nouvelle carte SIM au téléphone mobile lorsque l'un des répertoires est vide et l'autre répertoire contient des entrées.

En outre, le procédé qui vient d'être décrit permet à l'utilisateur d'associer une nouvelle carte SIM au téléphone mobile lorsque le répertoire de la carte SIM et le répertoire du téléphone contiennent tous deux des entrées.

La figure 2 illustre les sous-étapes de l'étape 50 de mise à jour du répertoire du téléphone mobile du procédé de la figure 1.

Les sous-étapes 51 à 515 sont exécutées pour chaque entrée du répertoire de la carte SIM, que cette entrée soit vide ou qu'elle contienne des données.

Les sous-étapes 516 à 519 sont exécutées pour chaque nouvelle entrée enregistrée en tant que nouvelle entrée en cours dans les moyens mémoire du téléphone mobile.

Selon une première sous-étape 51, pour chaque entrée contenue dans le répertoire le la carte SIM, le téléphone mobile calcule un paramètre de contrôle dit « checksum » associé à l'entrée. Le paramètre de contrôle est une valeur calculée selon une formule prédéterminée à partir des données associées à chaque champ de l'entrée. Le paramètre de contrôle est par exemple un nombre codé sur au moins 4 bits (par exemple un code CRC32) de manière à permettre une bonne détection des modifications dans les entrées du répertoire de la carte SIM.

Selon une deuxième sous-étape 52, le téléphone mobile compare le paramètre de contrôle calculé lors de la première sous-étape 51 à un paramètre de contrôle calculé précédemment pour la même entrée et enregistré dans la mémoire du téléphone mobile. La comparaison entre les paramètres de contrôle permet au téléphone mobile de détecter si l'entrée a été modifiée.

Selon une troisième sous-étape 53, le téléphone mobile en déduit si l'entrée a été modifiée dans le répertoire de la carte SIM.

Si l'entrée a été modifiée, alors le téléphone mobile exécute une quatrième sous-étape 54 selon laquelle le téléphone mobile détermine si il existe des modifications en cours enregistrées dans le téléphone mobile pour l'entrée considérée.

Si il existe des modifications en cours enregistrées dans le téléphone mobile pour cette entrée, alors le téléphone mobile exécute une cinquième sous-étape 55 selon laquelle le téléphone mobile copie les données de l'entrée modifiée contenue dans la carte SIM dans une entrée vide du répertoire du téléphone mobile.

Puis, selon une sixième sous-étape 56, le téléphone mobile enregistre l'entrée modifiée en tant que nouvelle entrée en cours dans des moyens mémoire du téléphone mobile.

Par ailleurs, selon une septième sous-étape 57, le téléphone mobile copie l'entrée modifiée dans une nouvelle entrée vide du répertoire de la carte SIM.

Selon une huitième sous-étape 58, le téléphone calcule un paramètre de contrôle associé à l'entrée créée.

Puis, selon une neuvième sous-étape 59, le téléphone mobile enregistre un paramètre de contrôle calculé pour la nouvelle entrée dans une mémoire du téléphone mobile.

Si lors de la quatrième sous-étape 54, le téléphone mobile détermine qu'il n'existe aucune modification en cours enregistrée dans le téléphone mobile, alors le téléphone mobile exécute une dixième sous-étape 510 selon laquelle le téléphone mobile met à jour le répertoire du téléphone mobile. A cet effet, le téléphone mobile copie l'entrée du répertoire de la carte SIM dans le répertoire du téléphone mobile.

Puis, le téléphone mobile exécute une onzième sous-étape 511 selon laquelle le téléphone mobile enregistre dans une mémoire du téléphone mobile le paramètre de contrôle calculé pour l'entrée lors de la première sous-étape 51.

Si lors de la troisième sous-étape 53, le téléphone mobile détermine qu'aucune modification n'a été apportée dans l'entrée du répertoire de la carte SIM, alors le téléphone mobile exécute une douzième sous-étape 512 selon laquelle le téléphone mobile détermine si il existe des modifications en cours enregistrées dans le téléphone mobile pour l'entrée considérée.

Si il existe des modifications en cours enregistrées dans le téléphone mobile pour cette entrée, alors le téléphone mobile exécute une treizième sous-étape 513 selon laquelle le téléphone mobile met à jour le répertoire de la carte SIM. A cet effet, le téléphone mobile copie l'entrée du répertoire du téléphone mobile dans le répertoire de la carte SIM.

Puis le téléphone mobile exécute une quatorzième sous-étape 514 selon laquelle le téléphone calcule un paramètre de contrôle associé à l'entrée modifiée.

Ensuite, le téléphone mobile exécute une quinzième étape 515 selon laquelle le téléphone mobile enregistre un paramètre de contrôle calculé pour l'entrée modifiée dans une mémoire du téléphone mobile.

Selon une seizième sous-étape 516, le téléphone mobile détermine si il existe une nouvelle entrée enregistrée en tant que nouvelle entrée en cours dans les moyens mémoire du téléphone mobile.

Si c'est le cas, le téléphone mobile exécute une dix-septième sous-étape 517 selon laquelle le téléphone mobile crée une nouvelle entrée dans le répertoire de la carte SIM et copie les données de la nouvelle entrée en cours dans la nouvelle entrée du répertoire de la carte.

Puis, selon une dix-huitième sous étape 518, le téléphone mobile calcule un paramètre de contrôle associé à l'entrée créée.

Puis, selon une dix-neuvième sous-étape 519, le téléphone mobile enregistre un paramètre de contrôle calculé pour la nouvelle entrée dans une mémoire du téléphone mobile.

### MODE DE FONCTIONNEMENT « ASSOCIE »

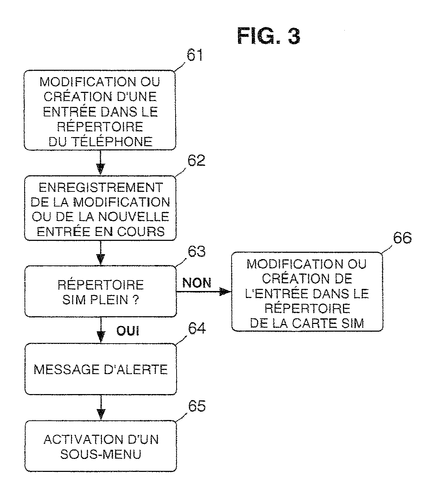

La figure 3 illustre de manière schématique les étapes d'un procédé de gestion des répertoires d'un téléphone mobile lorsque le téléphone mobile fonctionne selon le mode associé (mode de fonctionnement 1).

Dans ce mode de fonctionnement, l'utilisateur n'a accès qu'au répertoire du téléphone mobile.

Selon une première étape 61, on suppose que l'utilisateur modifie une entrée dans le répertoire du téléphone mobile. Par exemple, l'utilisateur crée une nouvelle entrée dans laquelle il inclut des données relatives à un nouveau contact ou il modifie des données dans une entrée déjà existante.

La modification du répertoire du téléphone mobile déclenche automatiquement l'exécution des étapes suivantes.

Selon une deuxième étape 62, le téléphone mobile enregistre la nouvelle entrée ou l'entrée modifiée en tant qu'entrée modifiée en cours dans des moyens mémoire du téléphone mobile.

Selon une troisième étape 63, le téléphone mobile détermine si répertoire de la carte SIM est plein.

Le répertoire de la carte SIM est plein lorsqu'il n'est plus possible d'enregistrer d'ajouter de nouvelles entrées à cause de la capacité limitée de la mémoire de la carte SIM.

Si au cours de la troisième étape 63, le téléphone mobile détermine que le répertoire de la carte SIM n'est pas plein, alors le téléphone mobile exécute une sixième étape 66 selon laquelle le téléphone mobile met à jour le répertoire de la carte SIM. A cet effet, le téléphone mobile copie les entrées du répertoire du téléphone mobile dans le répertoire de la carte SIM.

Si le répertoire de la carte SIM est plein, alors, selon une quatrième étape 64, le téléphone mobile affiche sur un écran un message d'alerte indiquant que le répertoire de la carte SIM est plein et que les nouvelles données seront enregistrées uniquement dans le répertoire du téléphone mobile.

Selon une cinquième étape 65, le téléphone mobile déclenche l'activation un sous-menu spécifique.

Ce sous-menu spécifique correspond à un retour à un mode de fonctionnement classique du téléphone mobile. Dans ce mode de fonctionnement, l'utilisateur a accès indépendamment au répertoire de la carte SIM et au répertoire du téléphone mobile.

### MODE DE FONCTIONNEMENT « DISSOCIE »

Dans le mode de fonctionnement dissocié (mode de fonctionnement 2), l'utilisateur a accès uniquement au répertoire de la carte SIM présente dans le téléphone mobile et il ne peut modifier que le répertoire de la carte SIM. II n'a pas accès au répertoire du téléphone mobile.

A chaque insertion d'une carte SIM différente dans le téléphone mobile mobile, le numéro de série de la carte SIM est enregistré dans la mémoire du téléphone mobile en tant que numéro dissocié.

La figure 5 illustre un téléphone mobile 200 comprenant une couche logicielle 210 dans laquelle est enregistrée un programme apte à exécuter les étapes du procédé qui vient d'être décrit. Les étapes du procédé de d'initialisation du téléphone mobile sont exécutées automatiquement lors de la mise en marche du téléphone mobile.

Le téléphone mobile 200 contient également une carte SIM 220 dans laquelle est enregistrée un répertoire 221, le répertoire étant composé d'une pluralité d'entrées 222, chaque entrée contenant une série de données organisées par champs 223.

Le téléphone mobile 200 comprend des moyens mémoire 230, les moyens mémoire 230 comprenant une section 240 contenant le répertoire du téléphone mobile 241, le répertoire 241 étant composé d'une pluralité d'entrées 242, chaque entrée contenant une série de données organisées par champs 243.

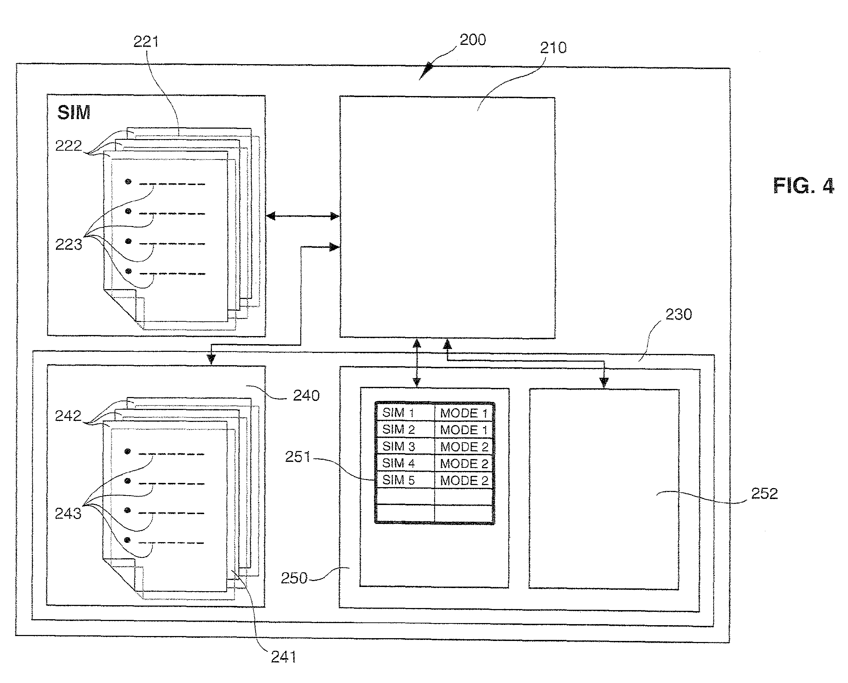

Les moyens mémoire 230 comprennent également une section 250 dans laquelle sont enregistrées les numéros de série 251 des cartes SIM connues par le téléphone mobile ainsi qu'un mode de fonctionnement en relation chacune de ces cartes SIM (mode de fonctionnement associé ou mode de fonctionnement dissocié). Sur la figure 4, deux cartes SIM (SIM 1 et SIM 2) parmi les cartes SIM connues sont des cartes SIM associées au téléphone mobile 200.

Les moyens mémoire 230 comprennent également une section 252 dans laquelle peuvent être enregistrées les paramètres de contrôle associés à chaque entrée 222 du répertoire de la carte SIM associée au téléphone mobile et les modifications en cours dans le répertoire 241 du téléphone mobile.

## Revendications

1. Procédé de gestion de répertoires dans un terminal mobile (200) contenant un premier répertoire (241) et un deuxième répertoire (221), **caractérisé en ce qu'**il comprend les étapes consistant à :
- détecter (61) qu'un utilisateur modifie une information contenue dans le premier répertoire (241),
- copier (66) l'information modifiée dans le deuxième répertoire (221).

2. Procédé selon la revendication 1, comprenant en outre l'étape selon laquelle si le deuxième répertoire (221) est plein, afficher (64) un message d'alerte sur un écran du terminal mobile (200).

3. Procédé selon l'une des revendications 1 ou 2, dans lequel seules des informations contenues dans le premier répertoire peuvent être modifiées par l'utilisateur.

4. Procédé selon l'une des revendications 1 à 3, dans lequel le premier répertoire (241) est un répertoire enregistré dans des moyens mémoire (230) du terminal (200) et le deuxième répertoire (221) est un répertoire enregistré des moyens mémoire amovibles (220).

5. Procédé selon la revendication 4, comprenant des étapes préalables d'initialisation consistant à :
- enregistrer (90) dans les moyens mémoire (230) du terminal (200) des données identifiant des moyens mémoire amovibles associés au terminal (200),
- lorsqu'un utilisateur met en marche le terminal, déterminer (40) si les moyens mémoire amovibles (220) présents dans le terminal (200) sont associés au terminal mobile (200),
- si les moyens mémoire amovibles (220) présents dans le terminal (200) sont associés au terminal (200), activer (60) un premier mode de fonctionnement du terminal (200) dans lequel le terminal exécute les étapes de la revendication 1.

6. Procédé selon la revendication 5, comprenant l'étape consistant à afficher (130) une proposition sélectionnable par un utilisateur pour enregistrer des données identifiant les moyens mémoire amovibles (220) présents dans le terminal (200) en tant que moyens mémoire amovibles associés.

7. Procédé selon la revendication 6, comprenant les étapes consistant à déterminer (70, 80, 110) si l'un des répertoires (221, 241) est vide et si l'un des répertoires est vide, copier des informations de l'autre répertoire dans le répertoire vide.

8. Procédé selon l'une des revendications 4 à 7, comprenant l'étape selon laquelle, si les moyens mémoire amovibles (220) présents dans le terminal (200) ne sont pas associés au terminal (200), activer (160) un deuxième mode de fonctionnement dans lequel un utilisateur ne peut modifier que des données (223) contenues dans le deuxième répertoire (221).

9. Procédé selon l'une des revendications 4 à 8, comprenant une étape consistant à mettre à jour (50, 150) le premier et/ou le deuxième répertoire (241, 221) avant d'activer (60) le premier mode de fonctionnement.

10. Procédé selon la revendication 9, dans lequel la mise à jour (50, 150) du premier répertoire (241) comprend les sous-étapes consistant à :
- déterminer (53) si le deuxième répertoire (221) a été modifié,
- si le deuxième répertoire a été modifié, copier (55, 510) des modifications du deuxième répertoire (221) dans le premier répertoire (241).

11. Procédé selon la revendication 10, comprenant la sous-étape consistant à déterminer (51) pour chaque entrée (222) du deuxième répertoire (221) un paramètre de contrôle associé à l'entrée et comparer (52) le paramètre de contrôle ainsi déterminé avec à un paramètre de contrôle enregistré dans des moyens mémoire du terminal pour en déduire si l'entrée a été modifiée.

12. Procédé selon l'une des revendications 9 à 11, dans lequel l'étape de mise à jour du deuxième répertoire (221) comprend les sous-étapes consistant à :
- déterminer (54, 512, 516) si le premier répertoire (241) a été modifié,
- si le premier répertoire (241) a été modifié, copier (57, 513, 517) des modifications du premier répertoire (241) dans le deuxième répertoire (221).

13. Procédé selon la revendication 12, comprenant la sous-étape (54, 512, 516) consistant à déterminer pour chaque entrée (242) du premier répertoire (241) si il existe des modifications enregistrées dans le téléphone mobile en tant que modification en cours.

14. Terminal mobile cellulaire (200), **caractérisé en ce qu'**il inclut des moyens de traitement (210) programmés pour mettre en oeuvre le procédé selon l'une des revendications 1 à 13.
